(19) Europäisches Patentamt
European Patent Office
Office européen des brevets

(11) **EP 2 096 768 B1**

(12) **EUROPEAN PATENT SPECIFICATION**

(45) Date of publication and mention
of the grant of the patent:
**27.04.2011 Bulletin 2011/17**

(51) Int Cl.:
**H04B 1/69** $^{(2011.01)}$

(21) Application number: **09250498.4**

(22) Date of filing: **25.02.2009**

(54) **Apparatus and method for filtering narrow band interference in received pulsed radio signal**

Vorrichtung und Verfahren zur Filterung von Schmalbandinterferenzen in empfangenen impulsartigen Funksignalen

Appareil et procédé de filtrage d'interférence de bande étroite dans un signal radio pulsé reçu

(84) Designated Contracting States:
**GB**

(30) Priority: **28.02.2008 US 38916**

(43) Date of publication of application:
**02.09.2009 Bulletin 2009/36**

(73) Proprietor: **MITSUBISHI ELECTRIC CORPORATION**
**Chiyoda-ku**
**Tokyo 100-8310 (JP)**

(72) Inventors:
• **Sahinoglu, Zafer**
**Arlington, MA 02476 (US)**
• **Ozdemir, Onur**
**Syracuse, NY 13205 (US)**
• **Zhang, Jinyun**
**Cambridge, MA 02141 (US)**

(74) Representative: **Nicholls, Michael John**
**J.A. Kemp & Co.**
**14 South Square**
**Gray's Inn**
**London**
**WC1R 5JJ (GB)**

(56) References cited:
**WO-A-01/93445     US-A1- 2004 146 092**

**Description**

This invention relates generally to interference cancellation, and more particularly to cancelling narrow band interference in pulse radio signals.

In pulse radio systems, the transmitted signal encodes information as sharp carrier pulses at center frequencies in logical connex. One form of pulsed radio signals uses ultra-wide band UWB signaling. UWB has traditional applications in non cooperative radar imaging. Other applications include wireless communication, target sensing, sensor networks, precision locating and tracking.

UWB can have a frequency bandwidth greater than 500 MHz. Instead of being a continuous sinusoidal carrier wave as in conventional radio signals, UWB uses very short pulses. One valuable aspect of pulse-based UWB is that the pulse are very short in space, e.g., less than 23 cm for a 1.3 GHz bandwidth pulse, so most signal reflections do not overlap the original pulse.

In target sensing applications, signals with a wide bandwidth carry more information when compared to a narrow band system. This enables a finer time resolution, and a higher target and range resolution. As for wireless communications, wide band and ultra-wide band signals enable higher data rates.

In wireless wide band and ultra-wide band (UWB) systems, performance can be degraded due to co-existing high power narrow band signals. Because UWB systems operate over extremely wide frequency bands, they have to co-exist with other narrow band systems, which may operate at much higher power levels, e.g., see 47 C.F.R 15, SubPart F: Ultra-wideband, and the IEEE 802.15.4a standard.

In addition, intentional interferers can use high power narrow band signals to jam UWB systems. Even though narrow band interferers operate on a very small fraction of the bandwidth utilized by the wide band systems, they can still saturate front end amplifiers and other circuits of wide band receivers due to their relatively high operating power. Therefore, it is necessary to provide pulsed radio transceivers that can decrease narrow band interference (NBI).

Conventional systems that deal with NBI can either avoid NBI at the transmitter, or cancel the NBI at the receiver. Up to now, most NBI techniques do not provide an optimum solution, and they all have severe limitations for short pulse radio signals, such as used in UWB systems.

Most practical NBI avoidance techniques, such as multiband schemes, multicarrier approaches and pulse shaping methods, require accurate information about the center frequency of the NBI, which is not known *a priori* in most of the situations and needs to be estimated.

Although a number of digital NBI cancellation techniques are known for wide band systems, none of those approaches are practical for pulsed radio signals systems, because of an extremely high sampling rates and larger dynamic ranges for analog-to-digital converters to resolve the NBI. Conventional techniques are mostly based on employing adaptive filters, which behave similar to notch filters, to adaptively estimate and decrease NBI in the digital domain. Analog notch filtering can only be effective for canceling NBI in pulsed radio signals if exact information about the NBI is known, i.e., the center frequency and power, and that the NBI is fixed and always exists. This is impractical.

Another method uses a bank of analog notch filters arranged as rake filters at the receiver, which results in receivers that are complex and costly. The complexity increases depending on the number of rake fingers employed. Furthermore, the NBI may exist as a transient signal in the system which makes most of the NBI avoidance and cancellation techniques ineffective.

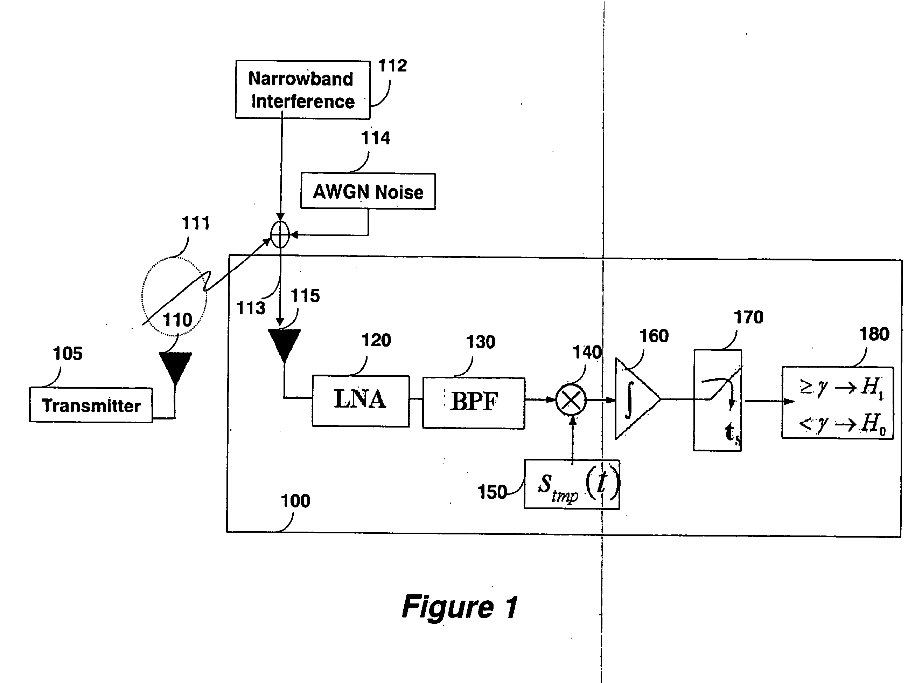

Figure 1 shows a conventional receiver 100 with a matched-filter. A transmitter transmits a signal 111 via an antenna 110. The signal 113 is received at an antenna 115 of the receiver. The channel has narrow band interference 112 and additive white Gaussian noise (AWGN) 114.

The received signal 113 is first passed through a low noise amplifier (LNA) 120, and a band-pass filter (BPF) 130 to filter out any out-of-band interference and noise. The output of the BPF 130 is correlated 140 with a stored signal template 150. The correlator output is integrated 160 over a certain interval, typically equal to signal duration, and digitized 170 by sampling. Hypothesis testing 180 is applied onto the digitized correlator output to recover the signal 111.

However, if the narrow band interference 112 is present in the received signal 113, then the matched-filter receiver 100 has to be much more complex in order to estimate the power spectral density (PSD) of the interference, and to use a pre-whitening filter before the matched-filtering operation.

Moreover, if the interference 112 is sinusoidal, nonlinear receivers, that perform maximum likelihood formulation, need to be implemented to obtain optimal performance, which are also highly complex and do not have any general structure.

If there is transient narrow band interference in the system with unknown parameters, then none of the above approaches are effective. Another challenge is that the received waveform shape must be perfectly known for the matched-filter to give optimum performance. However, in UWB systems, the waveform of the received signal is completely different from that of the transmitted signal, due to numerous reasons inherent in UWB signals.

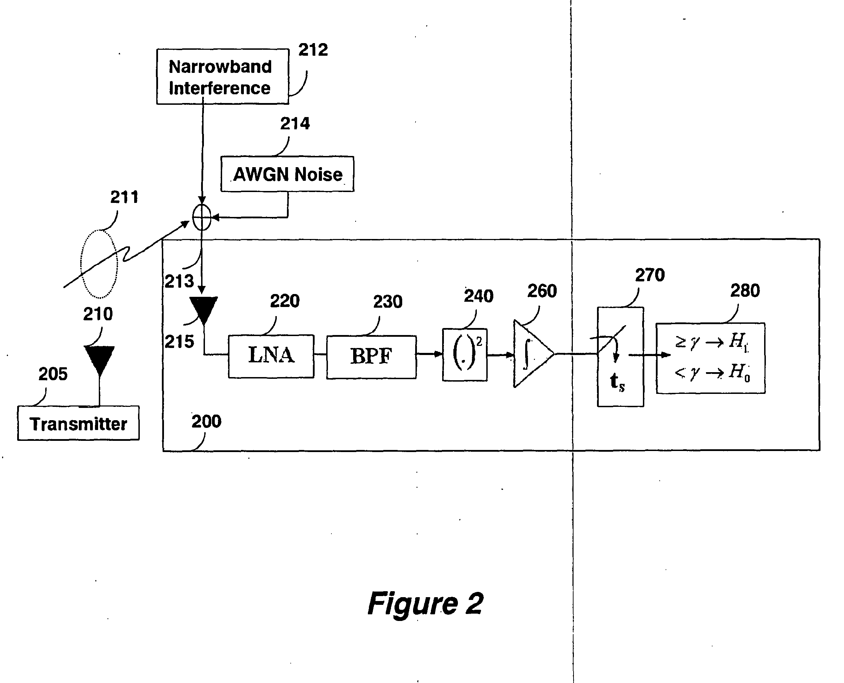

Figure 2 shows an alternative receiver 200, which uses self-heterodyne energy-detectors (ED). The transmitter 205 feeds its antenna 210 with the signal 211 to be transmitted. In the ED receiver 200, the received signal 213 is received at the receiver antenna 215 and then passed through an LNA 220 and a BPF 230. The output of the BPF 230 is squared 240, integrated 260, and converted to digital via sampling 270. Hypothesis testing 280 is applied onto the digital signal to recover the signal 211.

This receiver enables sampling at sub-Nyquist rates without any significant loss in the performance. However, sampling at lower rates introduces a trade-off between receiver complexity and target/range resolution in a target detection application. In the ED receiver, the energy measure of the received signal is

$$y(t) = \frac{1}{\tau} \int_{t-\tau}^{t} |r(t)|^2 dt \qquad (1)$$

where $r(t)$ and $\tau$ denote the received signal and a length of the integration window, respectively.

Equation (1) corresponds to the received signal energy normalized to the window length. The received signal $r(t)$ is sampled with a sampling rate $t_s$ to obtain the samples $y_k$, which are compared to a previously defined threshold $\gamma$. If the threshold is exceeded, then the signal is present. This can be handled as a binary hypothesis testing problem, in which the interference-plus-noise hypothesis $H_0$ is tested against a signal-plus-interference-plus-noise hypothesis $H_1$ as

$$\begin{aligned} \mathcal{H}_0 &: \quad y_k = i_k + n_k \\ \mathcal{H}_1 &: \quad y_k = s_k + i_k + n_k \end{aligned} \qquad (2)$$

where $S_k$, $i_k$, and $n_k$ denote the unknown signal 211, the interference 212 and the noise 214 present in the system, respectively. The AWGN noise samples $n_k$ are modeled as a Gaussian random variable with a variance $\sigma_n^2$.

It should be noted that that for an AWGN channel and completely unknown signal parameters, the ED provides the uniformly most powerful (UMP) test, i.e., it gives the optimal detection performance. However, if there is an unknown NBI 212 in the system, ED is not UMP anymore, and signal energy needs to be increased in order to compensate for the performance degradation caused by the NBI.

US 2004/0146092 discloses interference mitigating circuitry in which the output of a low noise amplifier is down-converted by mixing with a carrier and using a high-pass filter to eliminate interference such as UNII (Unlicenced National Information Infrastructure band) interference.

The present invention provides.an apparatus and a method for filtering narrow band interference in a received pulsed radio signal as specified in the claims.

The embodiments of the invention provide a method and apparatus for decreasing narrow band interference (NBI) in a pulse radio receiver. The receiver uses energy detection. The receiver is capable of suppressing NBI in the analog domain at a very low additional cost, which makes the receiver practical to implement for transient signal detection in the presence of NBI in ultra-wide band (UWB) systems.

The invention can be used in both active and passive sensing systems to detect the presence of targets, as well as in wireless communications such as demodulation of on-off keyed (OOK) UWB signals.

The receiver uses a cascaded non-linear energy operator and a high pass filter (HPF). The non-linear energy operator is a Teager-Kaiser energy operator (TKEO). With the TKEO, the NBI is converted to a low frequency signal, which is then suppressed by a high-pass filter before energy is detected.

The invention will now be described by way of non-limiting example with reference to the accompanying drawings, in which:

Figure 1 is a block diagram of a conventional matched-filter based receiver;

Figure 2 is a block diagram of a conventional energy detection based receiver;

Figure 3 is a block diagram of a receiver with non-linear filtering according to an embodiment of the invention;

Figure 4 is a block diagram of a non-linear filter according to an embodiment of the invention;

Figure 5 is a schematic of a spectrum of narrow band interference with respect to an ultra-wide band spectrum; and

Figure 6 is a graph comparing a performance of the receiver according to the invention to the performance of conventional receivers.

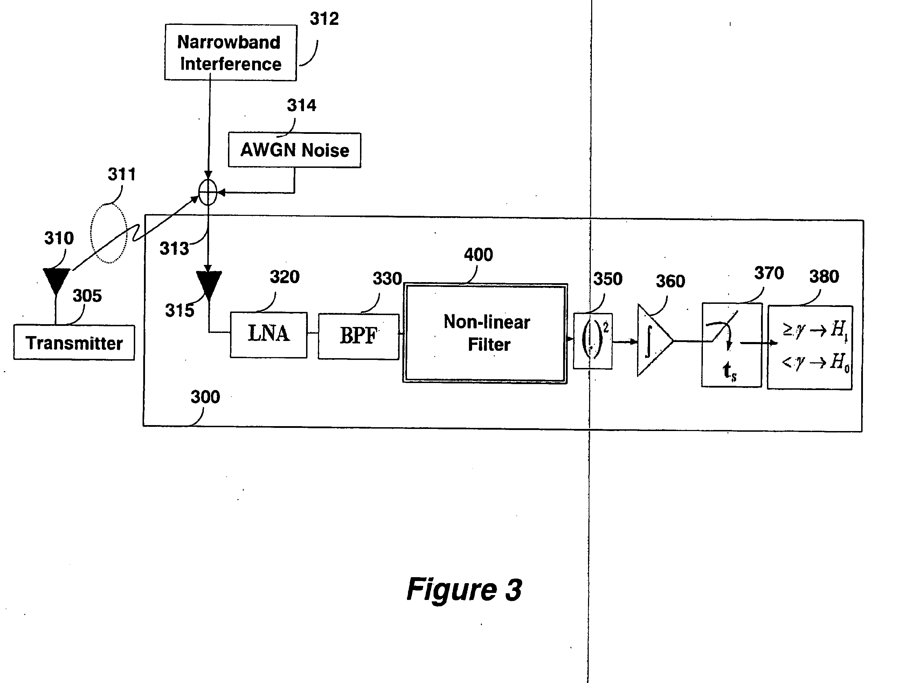

Figure 3 shows a Teager-Kaiser Energy Detector (TKED) receiver 300 according to an embodiment of the invention. The TKED receiver can decrease narrow band interference (NBI) in pulsed wide band and ultra-wide band (UWB) radio signals.

The receiver 300 include a low noise amplifier 320 connected to a band pass filter (BPF) 330.

The output of the BPF is fed to a non-linear filter 400 according to an embodiment of the invention as described in detail below.

The non-linear filter is followed by a square-law device 350. The output of the device 350 is integrated 360 and sampled, and then followed by hypothesis testing 380. The operation of the non-linear filter is described below.

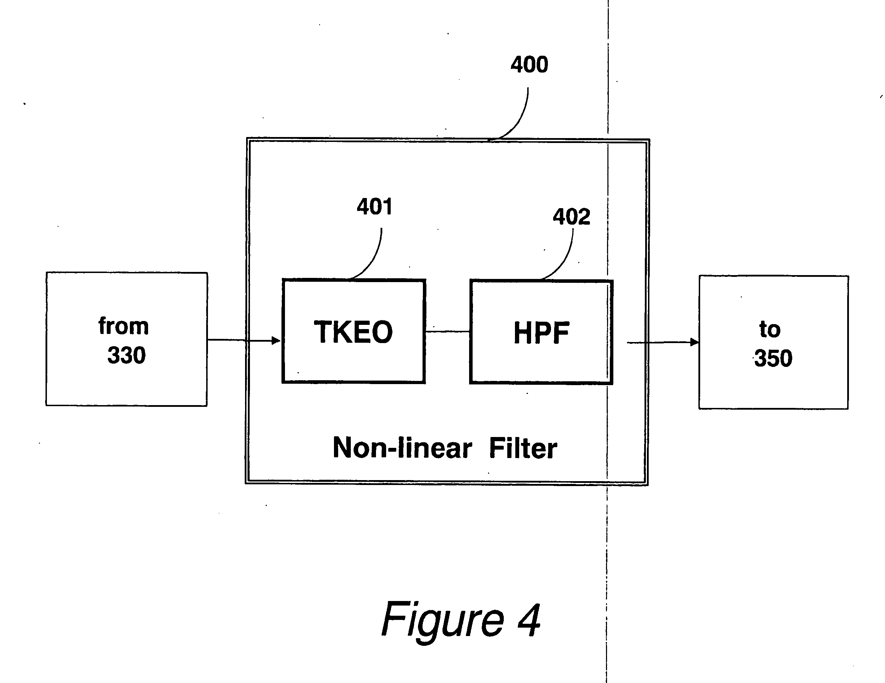

Figure 4 shows the non-linear filter 400. The filter includes a Teager-Kaiser energy operator (TKEO) 401 and a high-pass filter 402 connected sequentially between the antenna and the energy detector. The TKEO operator 401 acts as a *spectrum-shifter* and 'moves' the NBI component of the received signal towards very low frequencies. These low-frequency components resulting from the NBI are then eliminated by the high pass filter 402 before energy detection. The mechanism of the TK operator is discussed in the next section.

**Teager-Kaiser Energy Operator (TKEO)**

The Teager-Kaiser energy operator (TKEO) is a non-linear differential energy operator which was first describe by F. Kaiser, "On a simple algorithm to calculate the 'energy' of a signal," IEEE International Conference on Acoustics, Speech and Signal Processing, vol. 1, pp.381-384, April 1990. The TKEO has been used for transient signal detection, but not for NBI cancellation in pulsed radio signal, such as UWB signals.

[001] Let $\varphi(s(t))$ denote a continuous time TK energy operation on an input signal $s(t)$. Then, $\varphi(s(t))$ is

$$\varphi(s(t)) = \dot{s}(t)^2 - s(t)\ddot{s}(t), \tag{3}$$

where $\dot{s}(t)$ indicates the first derivative of the signal $s(t)$, and $\ddot{s}(t)$ is the second derivative of the signal $s(t)$.

If the signal $s(t)$ is a single sinusoidal pulse with amplitude A and frequency $f_c$, then for

$$s(t) = A\cos(2\pi f_c t + \theta), \text{ and}$$

$$\varphi(s(t)) = A^2(2\pi f_c)^2, \tag{4}$$

where $\theta$ is a random phase of a sinusoid uniformly distributed within $[0,2\pi$ pi$]$.

Thus, the TKEO functions as a *frequency-to-DC converter*. The output of the TKEO is a DC signal, which is proportional to the square of both the amplitude and the frequency of the pulse, see Equation 4.

The pulse $s(t)$ is sampled at frequency $f_s$ to obtain discrete-time samples $s(n)$. In discrete time, the TKEO is

$$\varphi(s(n)) = \dot{s}(n)^2 - s(n-1)s(n+1) \tag{5}$$

Note that the TKEO is almost an instantaneous operator because it only needs two adjacent samples. Thus, the TKEO can apply to UWB signals, which have extremely short pulses, on the order of nanoseconds. If $s(n) = A\cos(\Omega n + \theta)$, then

$$\varphi(s(t)) == A^2(\sin(\Omega))^2, \tag{6}$$

where $\Omega = 2\pi f_c / f_s$.

**TKED Receiver**

As shown in Figure 3, the transmitter 305 feeds its antenna 310 with a pulsed radio signal 311, e.g., an ultra-wide band signal (UWB). The signal 311 passes through a channel, and arrives at the receiver antenna 315. The received signal 313 can include NBI 312 and AWGN 314.

The received signal 313 is first passed through the LNA 320 and the BPF 330 to remove out-of-band interference and pass only the frequency band of the signal of interest 311.

The non-linear filter 400 is applied to the output of the BPF 330. The output of the filter 400 is then fed into the square-law operator 350, integrated 360 and converted to discrete signals by sampling at rate $t_s$ 370.

The binary hypothesis testing 380 is applied on the discrete signal by comparing the test statistics to a threshold $\gamma$.

As shown in Figure 4, the non-linear filter 400 includes the TKEO 401 and the high pass filter (HPF) 402.

**Effect of the TK Operator on Wide band Signals and NBI**

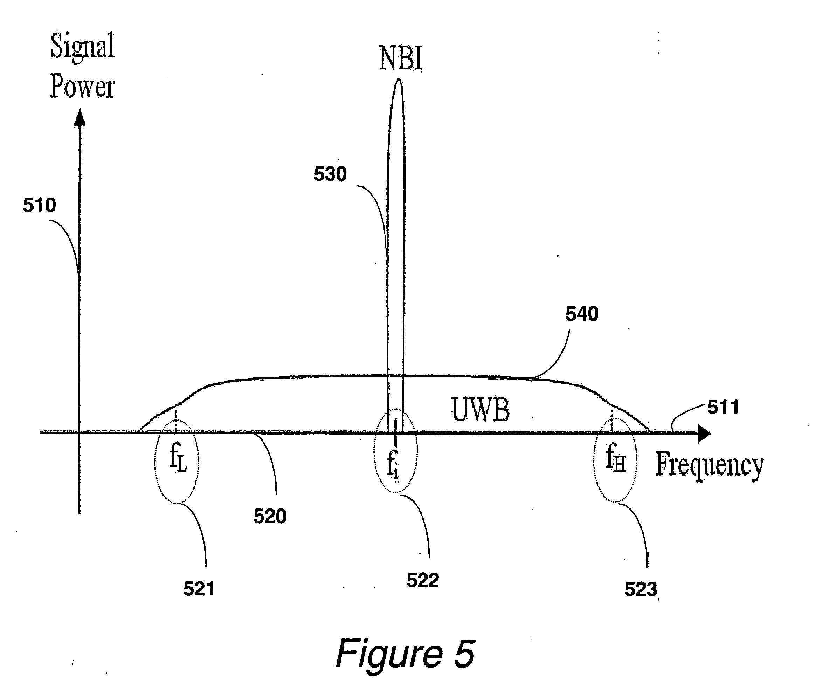

Figure 5 shows a UWB signal 540 and NBI 530 as a function of signal power 510 and frequency 511. The UWB signal 540 has a low cutoff frequency of $f_L$ 521 and a high cutoff frequency of $f_H$ 523. The NBI 530 has a center frequency $f_i$ 522.

The power level of the NBI is substantially higher than the power level of the UWB signal 540. Therefore, if the NBI is not suppressed, the received NBI can easily saturate the front end of a conventional UWB receiver.

The NBI can be modeled in two ways: first, as a single tone interferer of the form $s(t) = A_i \cos(2\pi f_i t + \theta_i)$, where $A_i$, $f_i$, and $\theta$ are the amplitude, frequency, phase of the NBI, respectively; and second as band-limited interference, which is modeled as a zero mean Gaussian random process with power spectral density of

$$S_i(f) = \begin{cases} P_i, & f_i - \dfrac{B_{nbi}}{2} \leq |f| \leq f_i + \dfrac{B_{nbi}}{2} \\ 0, & otherwise \end{cases} \qquad (7)$$

where $B_{nbi}$ and $f_i$ are the bandwidth and the center frequency of the interferer, respectively, and $P_i$ is the power spectral density. In the analysis of the TKED receiver performance, the single tone interference is considered for simplicity of this description.

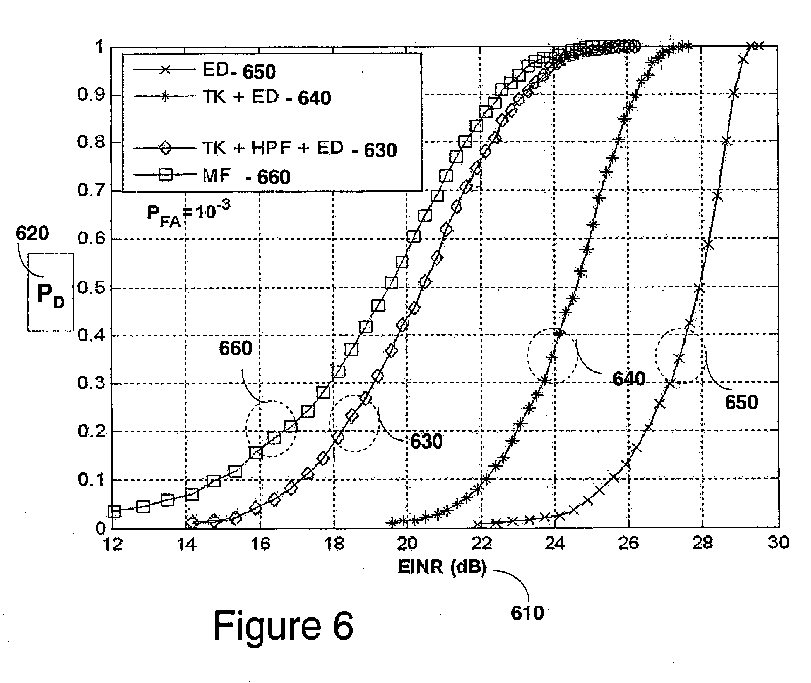

Figure 6 compares signal detection probability ($P_D$) 620 as a function of signal energy to interference plus noise energy ratio (EINR) 610 for a matched-filter receiver 660, an ED receiver 650, a TKED receiver 640 without a high-pass filter, and the TKED receiver 630 according to embodiments of invention.

As stated before, the matched filter design is impractical for decreasing narrow band interference in pulsed radio signals. Clearly, our TKED receiver 300, also referred to as 'TK+HPF+ED receiver, outperforms the ED receiver and the 'TK+ED only' receiver, which does not include the high pass filter (HPF).

Although the invention has been described with reference to certain preferred embodiments, it is to be understood that various other adaptations and modifications can be made. Therefore, the appended claims define the scope of the invention.

**Claims**

**1.** An apparatus for filtering narrow band interference in a received pulsed radio signal comprising:

a non-linear filter (400), connected to an antenna (315) for receiving a pulse radio signal, the non-linear filter configured to shift narrow band interference in the received pulsed radio signal to a lower frequency; and
a high pass filter (402), connected to the non-linear filter, the high pass filter configured to remove the narrow band interference that has been shifted by the non-linear filter (400);
**characterised in that** the non-linear filter uses a Teager-Kaiser energy operator (401) to shift the narrow band interference.

**2.** The apparatus of claim 1, further comprising:

an energy detector connected to the high pass filter.

3. The apparatus of claim 2, in which the non-linear filter (400) is connected to the energy detector via a square-law device (350) and a signal integrator (360).

4. The apparatus of claim 1, in which the receive pulsed radio signal is an ultawide band signal.

5. The apparatus of claim 4, in which the ultra-wide band signal is used for at least one of non cooperative radar imaging, target sensing, precision locating, tracking and data communication.

6. The apparatus of claim 4 or 5, in which the ultra-wide band signal is on-off keyed.

7. The apparatus of any one of claims 1 to 6, in which the non-linear filter is connected to the antenna (315) via a low noise amplifier (320) and a band pass filter (330).

8. The apparatus of any one of claims 1 to 7, in which the received pulsed radio signal includes single sinusoidal pulses, the Teager-Kaiser energy operator (401) functions as a frequency-to-DC converter.

9. The apparatus of claim 8, in which an output of the Teager-Kaiser energy operator (401) is a DC signal, which is proportional to a square of an amplitude and a frequency of the pulses.

10. The apparatus of claim 8 or 9, in which the Teager-Kaiser energy operator (401) is applied to two adjacent samples of the pulses.

11. A method for filtering narrow band interference in a received pulsed radio signal comprising the steps of:

applying a non-linear filter (400) to a pulse radio signal, the non-linear filter configured to shift narrow band interference in the received pulsed radio signal to a lower frequency; and
applying a high pass filter (402), connected to the non-linear filter, the high pass filter configured to remove the narrow band interference that has been shifted by the non-linear filter (400);
**characterised in that** the non-linear filter uses a Teager-Kaiser energy operator (401) to shift the narrow band interference.

**Patentansprüche**

1. Vorrichtung zum Filtern von Schmalbandinterferenz in einem empfangenen gepulsten Funksignal, enthaltend:

einen nicht-linearen Filter (400), der mit einer Antenne (315) zum Empfangen eines gepulsten Funksignals verbunden ist, wobei der nicht-lineare Filter derart ausgebildet ist, dass er Schmalbandinterferenz in dem empfangenen gepulsten Funksignal zu einer niedrigeren Frequenz verschiebt; und
einen Hochpassfilter (402), der mit dem nicht-linearen Filter verbunden ist, wobei der Hochpassfilter derart ausgebildet ist, dass er die Schmalbandinterferenz, die durch den nicht-linearen Filter (400) verschoben wurde, entfernt,
**dadurch gekennzeichnet, dass**
der nicht-lineare Filter einen Teager-Kaiser Energieoperator (401) verwendet, um die Schmalbandinterferenz zu verschieben.

2. Vorrichtung nach Anspruch 1, weiter enthaltend:

einen Energiedetektor, der mit dem Hochpassfilter verbunden ist.

3. Vorrichtung nach Anspruch 2, bei der der nicht-lineare Filter (400) mit dem Energiedetektor über einen Quadrierer (350) und ein Signalintegriergerät verbunden ist.

4. Vorrichtung nach Anspruch 1, bei der das empfangene gepulste Funksignal ein Ultrabreitbandsignal ist.

5. Vorrichtung nach Anspruch 4, bei der das Ultrabreitbandsignal für zumindest eines aus nicht zusammenwirkender Radarbildgebung, Zielerkennung, Präzisionsortung, Standortverfolgung und Datenkommunikation verwendbar ist.

6. Vorrichtung nach Anspruch 4 oder 5, bei der das Ultraweitbandsignal ein-aus verschlüsselt ist.

7. Vorrichtung nach einem der Ansprüche 1 bis 6, bei der der nicht-lineare Filter mit der Antenne (315) über einen rauscharmen Verstärker (320) und einen Bandpassfilter (330)verbunden ist.

8. Vorrichtung nach einem der Ansprüche 1 bis 7, bei der das empfangene gepulste Funksignal einzelne sinusförmige Pulse einschließt, wobei der Teager-Kaiser Energieoperator (401) als Frequenz-zu-Gleichstrom-Wandler arbeitet.

9. Vorrichtung nach Anspruch 8, bei der ein Ausgabesignal des Teager-Kaiser Energieoperators ein Gleichstromsignal ist, das proportional zu einem Quadrat einer Amplitude und einer Frequenz der Pulse ist.

10. Vorrichtung nach Anspruch 8 oder 9, bei der der Teager-Kaiser Energieoperator (401) auf zwei benachbarte Abtastungen der Pulse angewendet wird.

11. Verfahren zum Filtern von Schmalbandinterferenz in einem empfangenen gepulsten Funksignal, enthaltend die Schritte:

Anwenden eines nicht-linearen Filters (400) auf ein gepulstes Funksignal, wobei der nicht-lineare Filter derart ausgebildet ist, dass er Schmalbandinterferenz in dem empfangenen gepulsten Funksignal zu einer niedrigeren Frequenz verschiebt; und
Anwenden eines Hochpassfilters (402), der mit dem nicht-linearen Filter verbunden ist, wobei der Hochpassfilter derart ausgebildet ist, dass er die Schmalbandinterferenz, die durch den nicht-linearen Filter verschoben wurde, entfernt,
**dadurch gekennzeichnet, dass**
der nicht-lineare Filter einen Teager-Kaiser Energieoperator (401) verwendet, um die Schmalbandinterferenz zu verschieben.

## Revendications

1. Appareil destiné à filtrer des interférences en bande étroite dans un signal radio pulsé reçu comprenant :

un filtre non linéaire (400), connecté à une antenne (315) destinée à recevoir un signal radio pulsé, le filtre non linéaire étant configuré de manière à décaler les interférences en bande étroite dans le signal radio pulsé reçu vers une fréquence plus basse ; et
un filtre passe-haut (402), connecté au filtre non linéaire, le filtre passe-haut étant configuré de manière à éliminer les interférences en bande étroite qui ont été décalées par le filtre non linéaire (400) ;
**caractérisé en ce que** le filtre non linéaire utilise l'opérateur d'énergie de Teager - Kaiser (401) de manière à décaler les interférences en bande étroite.

2. Appareil selon la revendication 1, comprenant en outre :

un détecteur d'énergie connecté au filtre passe-haut.

3. Appareil selon la revendication 2, dans lequel le filtre non linéaire (400) est connecté au détecteur d'énergie par l'intermédiaire d'un dispositif à loi quadratique (350) et d'un intégrateur de signal (360).

4. Appareil selon la revendication 1, dans lequel le signal radio pulsé reçu est un signal à bande ultra-large.

5. Appareil selon la revendication 4, dans lequel le signal à bande ultra-large est utilisé pour l'un au moins d'une imagerie radar non coopérative, d'une détection de cible, d'une localisation de précision, d'un suivi et d'une communication de données.

6. Appareil selon la revendication 4 ou la revendication 5, dans lequel le signal à bande ultra-large est manipulé en tout ou rien.

**7.** Appareil selon l'une quelconque des revendications 1 à 6, dans lequel le filtre non linéaire est connecté à l'antenne (315) par l'intermédiaire d'un amplificateur à faible bruit (320) et d'un filtre passe-bande (330).

**8.** Appareil selon l'une quelconque des revendications 1 à 7, dans lequel le signal radio pulsé reçu comprend des impulsions sinusoïdales uniques, l'opérateur d'énergie de Teager - Kaiser (401) fonctionne comme un convertisseur fréquence - DC.

**9.** Appareil selon la revendication 8, dans lequel une sortie de l'opérateur d'énergie de Teager - Kaiser (401) est un signal DC, qui est proportionnel au carré de l'amplitude et de la fréquence des impulsions.

**10.** Appareil selon la revendication 8 ou la revendication 9, dans lequel l'opérateur d'énergie de Teager - Kaiser (401) est appliqué à deux échantillons d'impulsions adjacents.

**11.** Procédé destiné à filtrer des interférences en bande étroite dans un signal radio pulsé reçu comprenant les étapes consistant à :

appliquer un filtre non linéaire (400) à un signal radio pulsé, le filtre non linéaire étant configuré de manière à décaler les interférences en bande étroite dans le signal radio pulsé reçu vers une fréquence plus basse ; et appliquer un filtre passe-haut (402), connecté au filtre non linéaire, le filtre passe-haut étant configuré de manière à éliminer les interférences en bande étroite qui ont été décalées par le filtre non linéaire (400) ; **caractérisé en ce que** le filtre non linéaire utilise l'opérateur d'énergie de Teager - Kaiser (401) de manière à décaler les interférences en bande étroite.

*Figure 1*

*Figure 2*

EP 2 096 768 B1

**Narrowband Interference** 312

**AWGN Noise** 314

311

310

305

**Transmitter**

313

315

320 **LNA**

330 **BPF**

400 **Non-linear Filter**

350 $()^2$

360 $\int$

370 $t_s$

380 $\geq \gamma \rightarrow H_1$
$< \gamma \rightarrow H_0$

300

*Figure 3*

Figure 4

*Figure 5*

EP 2 096 768 B1

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040146092 A

**Non-patent literature cited in the description**

- **F. Kaiser.** On a simple algorithm to calculate the 'energy' of a signal. *IEEE International Conference on Acoustics, Speech and Signal Processing,* April 1990, vol. 1, 381-384